# EUROPÄISCHE PATENTSCHRIFT

(11) **EP 0 671 313 B1**
(45) Veröffentlichungstag und Bekanntmachung des Hinweises auf die Patenterteilung: **16.12.1998**
(21) Anmeldenummer: 95103415.6
(22) Anmeldetag: 09.03.1995
(51) Int. Cl.: B62H 5/06

(54) **Lenkschloss für ein Zweirad**
Steering lock for a two wheeler
Serrure de direction pour un véhicule à deux roues

(30) Priorität: 09.03.1994 DE 9403863 U
(43) Veröffentlichungstag der Anmeldung: 13.09.1995
(73) Patentinhaber: GKS GmbH Schliess-Systeme, D-42781 Haan (DE)
(72) Erfinder: Rath, Martin, D-42653 Solingen (DE); Reimann, Winfried, D-42277 Wuppertal (DE); Geromel, Mario, D-58332 Schwelm (DE)
(74) Vertreter: COHAUSZ HANNIG DAWIDOWICZ & PARTNER

(56) Entgegenhaltungen:
- DE-A- 3 439 412
- FR-A- 1 114 265
- US-A- 2 576 773

## Beschreibung

Die Erfindung betrifft ein Zweirad mit einem Lenkschloß, das ein Zylinderschloß aufweist.

Es ist bekannt, an einem Zweirad, insbesondere an einem Fahrrad ein Lenkschloß zu befestigen, das ein Drehen der vorderen Radgabel verhindert. Hierbei wurde das Lenkschloß am Lenkkopf des Rahmens befestigt, wobei der Sperriegel des Schlosses in eine Öffnung des Gabelschaftrohres eindrang. Bei einer solchen Konstruktion steht das Lenkschloß störend am Gabelkopf vor und ferner sind konstruktive Maßnahmen erforderlich, die nicht nur aufwendig sind, sondern auch eine nachträgliche Montage nicht zulassen.

Weiterhin ist aus der US 2 576 773 ein Lenkschloß bekannt, bei dem oberhalb der Gabel eine freiliegende Sperrscheibe mit Bohrungen angebracht ist, in die durch eine Bohrung im unteren Rahmenrohr ein Sperriegel eindringen kann, der durch ein Schloß betätigt wird, welches oberhalb des unteren Rahmenrohres angebracht ist. Bei einem derartigen Aufbau ist die freiliegende Sperrscheibe einer direkten zerstörerischen Manipulation zugänglich. Außerdem wird die Rahmenkonstruktion durch die Bohrung für den Sperriegel in einem wesentlichen tragenden Teil geschwächt.

Aufgabe der Erfindung ist es, ein Zweirad mit einem Lenkschloß derart zu verbessern, daß bei leichter Bedienbarkeit und hoher Sicherheit eine einfache Montage des Schlosses gegeben ist.

Diese Aufgabe wird erfindungsgemäß dadurch gelöst, daß das Lenkschloß am Rahmen-Lenkkopf unterhalb der Anschlußstelle des unteren Rahmenrohrs befestigt ist und ein Schloßsperriegel in seiner sperrenden Lage in eine Ausnehmung (Öffnung) einer Sperrscheibe hineinreicht, die an der Gabel und/oder an dem Gabelschaft befestigt ist und über der koaxial eine glockenförmige Lagerschale mit kegelstumpfförmiger oberer Außenseite liegt, an der das Zylinderschloß befestigt ist, wobei die Zylinderschloßachse rechtwinklig zur Mantelfläche des Kegelstumpfes ist.

Hierdurch wird ein Lenkschloß geschaffen, dessen besonders sichere, stabile und einfache Konstruktion bei ansprechendem äußeren Aussehen dadurch erreicht wird, daß über der Sperrscheibe eine Lagerschale liegt, an der das Zylinderschloß befestigt ist. Hierbei ist die Lagerschale glockenförmig und koaxial zur Sperrscheibe. Ebenfalls ist die Zylinderschloßachse rechtwinklig zur Mantelfläche des Kegelstumpfes.

Ein solches Lenkschloß ist bei einfacher Konstruktion besonders leicht montierbar, ohne in den Gabelkopf oder in den Gabelschaft eine Öffnung einbringen zu müssen. Vielmehr ist eine zusätzliche Sperrscheibe vorgesehen, die vom Schloß arretiert wird. Aufgrund der geringen äußeren Abmessungen ist die Konstruktion besonders vorteilhaft bei Zweirädern mit Mittelzugbremse einsetzbar.

Besonders vorteilhaft ist hierbei, wenn die Sperrscheibe als Ring oder Ringsektor koaxial zum Gabelschaft befestigt ist. Auch kann die Sperrscheibe zwei oder mehr Öffnungen für den Sperriegel aufweisen. Auch ist es von großem Vorteil, wenn Sperrscheibe und Lagerschale dicht aneinanderliegen.

Eine besonders sicher funktionierende und leicht handhabbare Vorrichtung wird dann geschaffen, wenn die Oberseite der Sperrscheibe kegelstumpfförmig und die Unter- oder Innenseite der Lagerschale in gleicher Weise kegelstumpfförmig ist.

Eine besonders einfache Handhabung wird dann erreicht, wenn der axial verschiebliche Sperriegel einen vorderen sperrenden Bereich aufweist, der gegenüber dem übrigen Sperriegel gegen Federdruck von der Sperrscheibe weg verschieblich ist, um in die Ausnehmung (Öffnung) der Sperrscheibe (2) einrastbar zu sein.

Vorzugsweise wird vorgeschlagen, daß zwischen Sperrscheibe und Lagerschale ein Kugellagerring direkt am Gabelschaft liegt. Auch kann die Sperrscheibe an der Gabeloberseite angeschweißt, angelötet oder angeschraubt sein.

Eine besonders sichere und stabile Konstruktion wird erreicht, wenn die Unterseite der Sperrscheibe und/oder die Oberseite der Gabel ein oder zwei Erweiterungen zur Befestigung der Sperrscheibe aufweisen. Auch wird hierzu vorgeschlagen, daß die Oberseite der Lagerschale eine Erweiterung zum Befestigen des Schlosses und/oder der Lagerschale am Rahmen aufweist. Ferner ist hierbei von Vorteil, wenn die Lagerschale oder die Sperrscheibe durch mindestens eine Schraube oder mindestens einen Stift gegen Verdrehen gesichert wird.

Besonders vorteilhafte Ausgestaltungen sind in den Ansprüchen 12 bis 15 aufgeführt.

Ein Ausführungsbeispiel der Erfindung ist in den Zeichnungen dargestellt und wird im folgenden näher beschrieben.

Es zeigen:

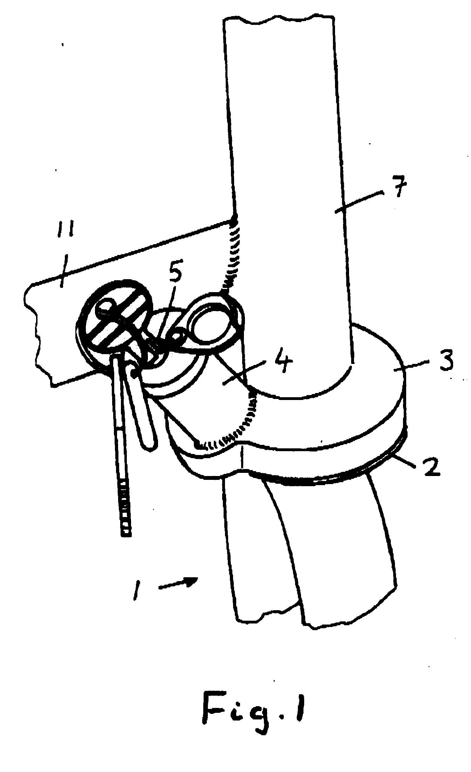

- Fig. 1: Eine perspektivische Ansicht des Lenkschlosses im Bereich der Gabel,
- Fig. 2: eine Oberansicht der an der Gabel befestigten Sperrscheibe,

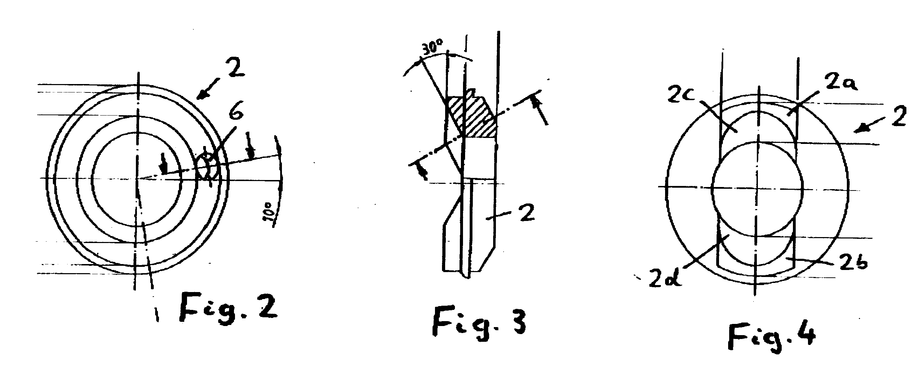

- Fig. 3: eine Seitenansicht der Sperrscheibe in teilweisem Schnitt,

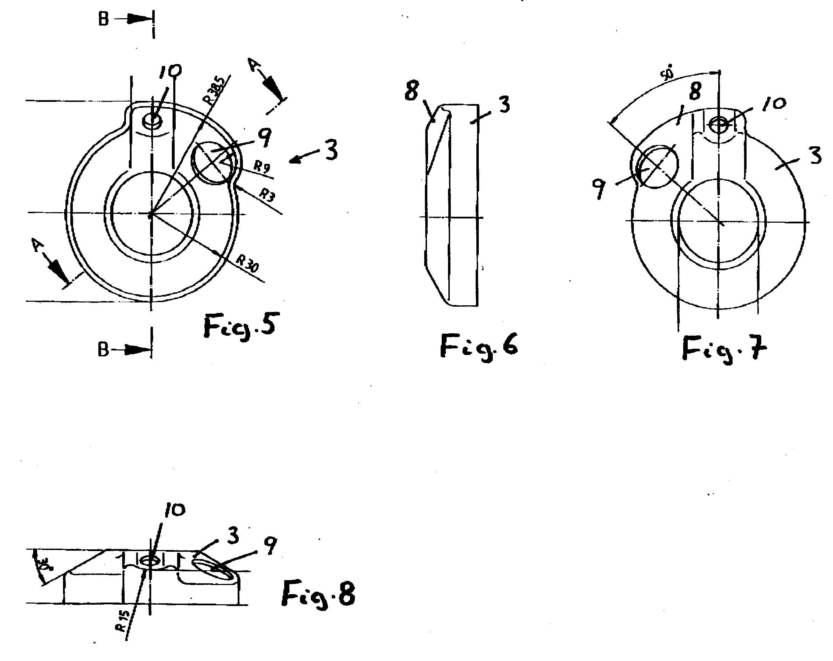

- Fig. 4: eine Unteransicht der Sperrscheibe,
- Fig. 5: eine Unteransicht der Lagerschale,
- Fig. 6: eine Seitenansicht der Lagerschale,
- Fig. 7: eine Oberansicht der Lagerschale und
- Fig. 8: eine zweite Seitenansicht der Lagerschale.

An der Oberseite einer Gabel 1 eines Zweirades, insbesondere eines Fahrrades ist eine Sperrscheibe 2 angeschraubt, angeschweißt oder angelötet, die an ihrer Unterseite Erweiterungen 2a,2b besitzt, die an der Gabeloberseite aufliegen, wobei die Erweiterungen 2a,2b Ausnehmungen 2c,2d besitzen, die den Rundungen der Gabeloberseite angepaßt sind.

Die Sperrscheibe 2 ist von einer glockenförmigen Lagerschale 3 überdeckt, deren Innenseite als auch obere Außenseite kegelstumpfförmig nach außen abfällt und damit der Kegelstumpfform der Oberseite der Sperrscheibe 2 angepaßt ist.

An der Oberseite der Lagerschale 3 steht eine muffenförmige oder rohrabschnittförmige Erweiterung als Schloßaußengehäuse 4 vor, die einstückig angeformt oder als zusätzliches Teil angeschweißt ist und deren Achse rechtwinklig zur Mantelfläche der Kegelstümpfe steht. In diesem Schloßaußengehäuse 4 liegt ein Zylinderschloß 5 ein, das axial verschieblich ist und an seiner Innenseite einen axial oder axial-parallel vorstehenden Sperriegel aufweist, der mit seinem vorderen Ende in eine Öffnung 6 der Sperrscheibe 2 hineinreicht, wenn das Zylinderschloß in der Sperrstellung nach innen verschoben ist.

Zum Befestigen des Schloßgehäuses 4 als auch zum Befestigen der Lagerschale 3 am Radrahmen, insbesondere am Lenkkopf 7 weist die Lagerschale 3 eine seitliche Erweiterung 8 auf, die eine Öffnung 9 für das Zylinderschloß 5 und eine zweite Öffnung 10 zum Anschrauben der Lagerschale am Rahmen-Lenkkopf 7 besitzt.

Zwischen der Sperrscheibe 2 und der Lagerschale 3 liegt ein nichtdargestellter Kugellagerring mit oberem und unterem Kugellagerlaufring, wobei der obere Laufring von der Lagerschale 3 und der untere Laufring von der Sperrscheibe 2 gebildet ist. Stattdessen kann aber auch das komplette Kugellager mit beiden Laufringen ein separates Teil sein, das zwischen der Sperrscheibe 2 und der Lagerschale 3 liegt.

In einer Alternative kann der Sperriegel des Zylinderschlosses 5 gegenüber dem verschieblichen Teil des Zylinderschlosses (Zylinderkern) gegen Federdruck verschieblich gelagert sein, so daß bei einem Eindrücken des Zylinderschlosses in die Sperrstellung der Sperriegel nachgeben kann, wenn er mit seiner Vorderseite nicht in die Sperröffnung 6 gelangt, sondern auf der Sperrscheibe 2 oben zur Auflage kommt. Wird dann in der Sperrstellung des Schlosses die Gabel verdreht, so rastet der Sperriegel in die Sperröffnung 6 ein, sobald diese unter den Sperriegel gelangt. Hierbei kann die Sperrscheibe 2 mehrere Sperröffnungen 6 besitzen, so daß die Gabel nur wenig verdreht werden muß, um die Sperrstellung zu erreichen.

In Alternativen ist die Sperrscheibe 2 am Gabelschaft mittels verzahnten Pressrippen drehfest angeordnet und die Lagerschale 3 ist am Rahmen-Lenkkopf 7 mittels verzahnten Pressrippen drehfest angeordnet. Die Lagerschale 3 kann einschließlich dem angeformten Schloßgehäuse 4 aus Stahldruckguß sein und eine Kunststoffummantelung aufweisen.

In einer weiteren Alternative kann die Sperrscheibe 2 auch anders geformt sein, insbesondere nur aus einem Teilring bestehen oder eine völlig andere Form als einen Ring aufweisen, insbesondere eine verhältnismäßig kleine Fläche sein. Auch kann die Sperrscheibe von einem Zahnring gebildet werden, wobei der Sperriegel in einem der Zwischenräume zwischen den Zähnen zur Einlage gelangt.

## Patentansprüche

1. Zweirad mit einem Lenkschloß, das ein Zylinderschloß mit einem Sperriegel aufwesist, **dadurch gekennzeichnet,** daß das Lenkschloß (2-5) am Rahmen-Lenkkopf (7) unterhalb der Anschlußstelle des unteren Rahmenrohrs (11) befestigt ist und der Sperriegel in seiner sperrenden Lage in eine Ausnehmung (6) einer Sperrscheibe hineinreicht, die an der Gabel (12) und/oder an dem Gabelschaft befestigt ist und über der koaxial eine glockenförmige Lagerschale (3) mit kegelstumpfförmiger oberer Außenseite liegt, an der das Zylinderschloß (4, 5) befestigt ist, wobei die Zylinderschloßachse rechtwinklig zur Mantelfläche des Kegelstumpfes ist.

2. Lenkschloß nach Anspruch 1, **dadurch gekennzeichnet,** daß die Sperrscheibe (2) als Ring oder Ringsektor koaxial zum Gabelschaft befestigt ist.

3. Lenkschloß nach Anspruch 1 oder 2, **dadurch gekennzeichnet,** daß die Sperrscheibe (2) zwei oder mehr Öffnungen (6) für den Sperriegel aufweist.

4. Lenkschloß nach Anspruch 3, **dadurch gekennzeichnet** , daß Sperrscheibe (2) und Lagerschale (3) dicht aneinanderliegen.

5. Lenkschloß nach einem der Ansprüche 3 und 4, **dadurch gekennzeichnet,** daß die Oberseite der Sperrscheibe (2) kegelstumpfförmig und die Unter- oder Innenseite der Lagerschale (3) in gleicher Weise kegelstumpfförmig ist.

6. Lenkschloß nach einem der vorigen Ansprüche, **dadurch gekennzeichnet,** daß der Sperriegel axial verschieblich ist und einen vorderen sperrenden Bereich aufweist, der gegenüber dem übrigen Sperriegel gegen Federdruck von der Sperrscheibe (2) weg verschieblich ist, um in die Ausnehmung (6) der Sperrscheibe (2) einrastbar zu sein.

7. Lenkschloß nach einem der vorigen Ansprüche, **dadurch gekennzeichnet,** daß zwischen Sperrscheibe (2) und Lagerschale (3) ein Kugellagerring direkt am Gabelschaft liegt.

8. Lenkschloß nach einem der vorigen Ansprüche, **dadurch gekennzeichnet,** daß die Sperrscheibe (2) an der Gabeloberseite angeschweißt, angelötet oder angeschraubt ist.

9. Lenkschloß nach einem der vorigen Ansprüche, **dadurch gekennzeichnet,** daß die Unterseite der Sperrscheibe (2) und/oder die Oberseite der Gabel (1) ein oder zwei Erweiterungen (2a,2b) zur Befestigung der Sperrscheibe aufweisen.

10. Lenkschloß nach einem der vorigen Ansprüche, **dadurch gekennzeichnet,** daß die Oberseite der Lagerschale (3) eine Erweiterung zum Befestigen des Schlosses (4,5) und/oder der Lagerschale (3) am Rahmen aufweist.

11. Lenkschloß nach einem der vorigen Ansprüche, **dadurch gekennzeichnet,** daß die Lagerschale (3) oder die Sperrscheibe (2) durch mindestens eine Schraube oder mindestens einen Stift gegen Verdrehen gesichert wird.

12. Lenkschloß nach einem der vorherigen Ansprüche, **dadurch gekennzeichnet,** daß die Sperrscheibe (2) am Gabelschaft mittels verzahnten Pressrippen drehfest angeordnet ist.

13. Lenkschloß nach einem der vorhergehenden Ansprüche 4 bis 12, **dadurch gekennzeichnet,** daß die Lagerschale (3) am Rahmen-Lenkkopf (7) mittels verzahnten Pressrippen drehfest angeordnet ist.

14. Lenkschloß nach einem der vorhergehenden Ansprüche 4 bis 13, **dadurch gekennzeichnet,** daß die Lagerschale (3) einschließlich eines angeformten Zylinderschloßgehäuses (4) aus Stahldruckguß ist und eine Kunststoffummantelung aufweist.

15. Lenkschloß nach einem der vorherigen Ansprüche 4 bis 14, **dadurch gekennzeichnet,** daß zwischen der Sperrscheibe (2) und der Lagerschale (3) ein Kugellagerring mit oberem und unterem Kugellagerlaufring liegt, wobei der obere Laufring von der Lagerschale (3) und der untere Laufring von der Sperrscheibe (2) gebildet ist.

## Claims

1. Bicycle with a steering column lock comprising a cylinder lock with a locking bolt, **characterized in that** the steering column lock (2-5) is mounted on the steering tube (7) below the connection point of the down tube (11) and that the locking bolt, in its locking position, extends into a recess (6) in a locking disk mounted on the fork (12) and/or the fork stem and above which lies coaxially a bell-shaped bearing shell (3) with a truncated-cone-shaped upper outer side on which the cylinder lock (4, 5) is mounted, whereby the cylinder lock axis lies perpendicular to the outer surface of the truncated cone.

2. Steering column lock according to Claim 1, **characterized in that** the locking disk (2), as a ring or ring segment, is coaxially mounted to the fork stem.

3. Steering column lock according to Claim 1 or 2, **characterized in that** the locking disk (2) features two or more openings (6) for the locking bolt.

4. Steering column lock according to Claim 3, **characterized in that** the locking disk (2) and the bearing shell (3) lie close against each other.

5. Steering column lock according to either of Claims 3 and 4, **characterized in that** the upper side of the locking disk (2) is truncated-cone-shaped and the lower or inner side of the bearing shell (3) is similarly truncated-cone-shaped.

6. Steering column lock according to any of the preceding Claims, **characterized in that** the locking bolt is axially movable and comprises a front locking section that can be slid away from the rest of the locking bolt against the spring pressure of the locking disk (2) in order to snap into the recess (6) in the locking disk (2).

7. Steering column lock according to any of the preceding Claims, **characterized in that** a ball bearing ring lies directly on the fork stem between the locking disk (2) and the bearing shell (3).

8. Steering column lock according to any of the preceding Claims, **characterized in that** the locking disk (2) is welded, soldered or bolted onto the upper side of the fork.

9. Steering column lock according to any of the preceding Claims, **characterized in that** the lower side of the locking disk (2) and/or the upper side of the fork (1) comprise one or two extensions (2a, 2b) to mount the locking disk.

10. Steering column lock according to one of the preceding Claims, **characterized in that** the upper side of the bearing shell (3) comprises an extension to mount the lock (4, 5) and/or the bearing shell (3) on the frame.

11. Steering column lock according to one of the preceding Claims **characterized in that** the bearing shell (3) or the locking disk (2) is secured against rotation by at least one screw or at least one pin.

12. Steering column lock according to any of the preceding Claims, **characterized in that** the locking disk (2) is mounted secured against rotation on the fork stem by means of toothed pressed ribs.

13. Steering column lock according to any of the preceding Claims 4 to 12, **characterized in that** the bearing shell (3) is mounted secured against rotation on the steering tube (7) by means of toothed pressed ribs.

14. Steering column lock according to any of the preceding Claims 4 to 13, **characterized in that** the bearing shell (3) including a molded-on cylinder lock casing (4) is made from die cast steel and comprises a plastic jacket.

15. Steering column lock according to any of the preceding Claims 4 to 14, **characterized in that** a ball bearing ring with upper and lower ball bearing race lies between the locking disk (2) and the

## Revendications

1. Bicyclette avec antivol sur la direction comprenant une serrure cylindrique avec un verrou de sûreté, **caractérisé en ce que** l'antivol sur la direction (2-5) est fixé sur le tube de direction (7) sous le point de connexion du tube oblique (11) et que le verrou de sûreté, dans sa position de verrouillage, s'étend jusque dans le creux (6) d'un disque de verrouillage fixé sur la fourche (12) et/ou sur le tube de fourche et au dessus duquel est située coaxialement une coquille de support en forme de cloche (3) avec un côté supérieur extérieur en forme de cône tronqué sur lequel est fixée la serrure cylindrique (4, 5), l'axe de la serrure cylindrique étant perpendiculaire à la surface extérieure du cône tronqué.

2. Antivol sur la direction selon Revendication 1, **caractérisé en ce que** le disque de verrouillage (2), en tant que bague ou segment de bague, est fixé coaxialement par rapport au tube de fourche.

3. Antivol sur la direction selon Revendication 1 ou 2, **caractérisé en ce que** le disque de verrouillage (2) présente deux ou plus ouvertures (6) pour le verrou de sûreté.

4. Antivol sur la direction selon Revendication 3, **caractérisé en ce que** le disque de verrouillage (2) et la coquille de support (3) sont juxtaposés.

5. Antivol sur la direction selon une des Revendications 3 et 4, **caractérisé en ce que** le côté supérieur du disque de verrouillage (2) est en forme de cône tronqué et que le côté inférieur ou intérieur de la coquille de support (3) est de même forme en cône tronqué.

6. Antivol sur la direction selon une des Revendications précédentes, **caractérisé en ce que** le verrou de sûreté est amovible axialement et qu'il présente une partie avant verrouillante qui peut être glissée en s'écartant du reste du verrou de sûreté et contre la pression de ressort du disque de verrouillage (2) de manière à s'encliqueter dans le creux (6) du disque de verrouillage (2).

7. Antivol sur la direction selon une des Revendications précédentes, **caractérisé en ce que,** entre le disque de verrouillage (2) et la coquille de support (3), se trouve une bague de roulement à billes directement sur le tube de fourche.

8. Antivol sur la direction selon une des Revendications précédentes, **caractérisé en ce que** le disque de verrouillage (2) est soudé, brasé ou vissé sur le côté supérieur de la fourche.

9. Antivol sur la direction selon une des Revendications précédentes, **caractérisé en ce que** le côté inférieur du disque de verrouillage (2) et/ou le côté supérieur de la fourche (1) est pourvu d'une ou de deux extensions (2a,2b) pour la fixation du disque de verrouillage.

10. Antivol sur la direction selon une des Revendications précédentes, **caractérisé en ce que** le côté supérieur de la coquille de support (3) est pourvu d'une extension pour la fixation du verrou (4, 5) et/ou de la coquille de support (3) sur le cadre.

11. Antivol sur la direction selon une des Revendications précédentes, **caractérisé en ce que** la coquille de support (3) ou le disque de verrouillage (2) est sécurisé contre la rotation par au moins une vis ou au moins un goujon.

12. Antivol sur la direction selon une des Revendications précédentes, **caractérisé en ce que** le disque de verrouillage (2) est disposé de manière antirotative sur le tube de fourche au moyen de nervures de serrage dentées.

13. Antivol sur la direction selon une des Revendications 4 à 12 précédentes, **caractérisé en ce que** la coquille de support (3) est disposée de manière antirotative sur le tube de direction (7) au moyen de nervures de serrage dentées.

14. Antivol sur la direction selon une des Revendications 4 à 13 précédentes, **caractérisé en ce que** la coquille de support (3), y compris un boîtier de serrure cylindrique solidaire moulé (4), est en acier coulé sous pression et est pourvue d'un revêtement en matière synthétique.

15. Antivol sur la direction selon une des Revendications 4 à 14 précédentes, **caractérisé en ce que,** une bague de roulement à billes avec bague de roulement supérieure et inférieure est située entre le disque de verrouillage (2) et la coquille de support (3), la bague de roulement supérieure étant formée par la coquille de support (3) et la bague de roulement inférieure par le disque de verrouillage (2).
